(19) Europäisches Patentamt
European Patent Office
Office européen des brevets

(11) **EP 4 542 484 B1**

(12) **EUROPEAN PATENT SPECIFICATION**

(45) Date of publication and mention
of the grant of the patent:
**01.04.2026 Bulletin 2026/14**

(21) Application number: **23306817.0**

(22) Date of filing: **17.10.2023**

(51) International Patent Classification (IPC):
**G06T 5/50** (2006.01)   **H04N 23/00** (2023.01)
**H04N 23/45** (2023.01)   **H04N 23/951** (2023.01)

(52) Cooperative Patent Classification (CPC):
**G06T 5/50; H04N 23/45; H04N 23/951;**
G06T 2207/10144; G06T 2207/20208

(54) **EVENT-BASED MOTION ESTIMATION FOR MULTIFRAME STACKING**

EREIGNISBASIERTE BEWEGUNGSSCHÄTZUNG FÜR MULTIFRAME-STAPELUNG

ESTIMATION DE MOUVEMENT BASÉE SUR UN ÉVÉNEMENT POUR UN EMPILEMENT MULTITRAME

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**23.04.2025 Bulletin 2025/17**

(73) Proprietor: **Prophesee**
**75012 Paris (FR)**

(72) Inventors:
• **PERRONE, Daniele**
**93160 Noisy-le-Grand (FR)**
• **SIRONI, Amos**
**75012 PARIS (FR)**

(74) Representative: **de Jong, Jean Jacques et al**
**Omnipat**
**610 Chemin de Fabrègues**
**13510 Éguilles (FR)**

(56) References cited:
**CN-A- 116 797 501**

• **MESSIKOMMER NICO ET AL: "Multi-Bracket High Dynamic Range Imaging with Event Cameras", 2022 IEEE/CVF CONFERENCE ON COMPUTER VISION AND PATTERN RECOGNITION WORKSHOPS (CVPRW), IEEE, 19 June 2022 (2022-06-19), pages 546 - 556, XP034174382, DOI: 10.1109/ CVPRW56347.2022.00070**

• **HAN JIN ET AL: "Neuromorphic Camera Guided High Dynamic Range Imaging", 2020 IEEE/CVF CONFERENCE ON COMPUTER VISION AND PATTERN RECOGNITION (CVPR), IEEE, 13 June 2020 (2020-06-13), pages 1727 - 1736, XP033804615, DOI: 10.1109/ CVPR42600.2020.00180**

• **SHAW RICHARD ET AL: "HDR Reconstruction from Bracketed Exposures and Events", ARXIV (CORNELL UNIVERSITY), 28 March 2022 (2022-03-28), Ithaca, pages 1 - 13, XP093149828, Retrieved from the Internet <URL:https:// bmvc2022.mpi-inf.mpg.de/0603.pdf> [retrieved on 20240409], DOI: 10.48550/arxiv.2203.14825**

• **WANG BISHAN ET AL: "Event Enhanced High-Quality Image Recovery", 24 February 2020, TOPICS IN CRYPTOLOGY - CT-RSA 2020 : THE CRYPTOGRAPHERS' TRACK AT THE RSA CONFERENCE 2020, SAN FRANCISCO, CA, USA, FEBRUARY 24-28, 2020, PAGE(S) 155 - 171, XP047593151**

• **YANG YIXIN ET AL: "Learning Event Guided High Dynamic Range Video Reconstruction", 2023 IEEE/CVF CONFERENCE ON COMPUTER VISION AND PATTERN RECOGNITION (CVPR), IEEE, 17 June 2023 (2023-06-17), pages 13924 - 13934, XP034402141, DOI: 10.1109/ CVPR52729.2023.01338**

• **LEI SUN ET AL: "Event-Based Fusion for Motion Deblurring with Cross-modal Attention", ARXIV.ORG, CORNELL UNIVERSITY LIBRARY, 201 OLIN LIBRARY CORNELL UNIVERSITY ITHACA, NY 14853, 11 January 2023 (2023-01-11), XP091412324, DOI: 10.1007/ 978-3-031-19797-0_24**

EP 4 542 484 B1

## Description

## Technical Field

The present invention relates to still-frame image processing, and more particularly to so-called multi-frame stacking techniques that produce an enhanced single image from multiple frames captured for a same scene.

## Background

Multi-frame stacking is typically used in cameras for noise reduction, high dynamic range (HDR) imaging, super-resolution imaging, focus stacking, etc. In a multi-frame pipeline process, multiple consecutive frames are captured for a same scene in a given time interval. Among the frames, a so-called anchor frame is selected as a reference frame. The remaining frames are aligned with the reference frame and then merged.

More specifically, a multi-frame planning step decides the number of frames to use, the exposure of each frame, and which frame to use as the anchor.

After the planned multi-frame acquisition, an alignment step estimates motion between each frame and the anchor frame. The resulting motion information is used to create for each frame a displacement map or optical flow referenced to the anchor frame. The displacement map includes a displacement vector for each pixel of the frame. Each frame is then aligned or registered with the anchor using its respective displacement map.

In a merging step, the aligned frames, including the anchor, are combined to produce an enhanced image according to any of several possible techniques.

For instance, for noise reduction, the aligned frames may be averaged pixel by pixel. See for instance [Godard C, Matzen K, Uyttendaele M. 2018, "Deep burst denoising", European Conference on Computer Vision, pp. 560-577]).

For high-dynamic range images, the frames are captured with different exposures. For each pixel of the enhanced image, the matching pixels in the aligned frames are evaluated to select the pixel having the best exposure. See for instance [Hasinoff SW, Sharlet D, Geiss R, Adams A, Barron JT, et al. 2016. "Burst photography for high dynamic range and low-light imaging on mobile cameras", ACM Transactions on Graphics 35:192].

The generation of super-resolution images relies on some motion to create sub-pixels between the pixels of the frames. The motion may be created internally by an optical image stabilization device of the camera that shifts the sensor or the optics by half a pixel between frames, or it may be the inevitable motion of a hand-held camera. Each frame is then aligned with a set of sub-pixels of the anchor frame that involves the least displacement, and the merging step involves creating the sub-pixels in the enhanced image from the correspondingly aligned frames. See for instance [Farsiu S, Elad M, Milanfar P. 2006, "Multiframe demosaicing and super-resolution of color images", IEEE Trans. Image Processing 15:141-159].

Some other similar systems are disclosed in "Multi-Bracket High Dynamic Range Imaging with Event Cameras", Messikommer Nico et al, 2022 IEEE/CVF Conference on Computer Vision and Pattern Recognition Workshops (CVPRW); "Neuromorphic Camera Guided High Dynamic Range Imaging", Han Jin et al, 2020 IEEE/CVF Conference on Computer Vision and Pattern Recognition (CVPR); "HDR Reconstruction from Bracketed Exposures and Events", Shaw Richard et al, arXiv; and "Event Enhanced High-Quality Image Recovery", Wang Bishan et al, Topics in Cryptology - CT-RSA 2020.

Accurate motion estimation is important for a good multi-frame stacking result. Wrong motion estimation may lead to wrong alignment between the frames which will compromise the quality of the merging step, producing artifacts such as ghosting, double edges, loss of texture, etc.

## Summary

An image enhancement method using multi-frame stacking generally comprises the steps of storing multiple frames of a target scene captured by a frame-based camera during an acquisition interval; storing a series of events produced during the acquisition interval by an event-based camera viewing the target scene; synchronizing timestamps of the events and timestamps of the frames; selecting an anchor frame among the multiple frames; aligning a current frame with respect to the anchor frame, based on stored events having timestamps corresponding to an interval between the anchor frame and the current frame; and merging the aligned frame and the anchor frame.

The aligning step may comprise the steps of generating an optical flow for a current frame with respect to the anchor frame, based on the stored events; and creating the aligned frame by applying the optical flow to the current frame.

The step of selecting the anchor frame may comprise the steps of, for each frame, counting a number of stored events having timestamps corresponding to an exposure interval of the frame; and selecting the anchor frame based on the event counts.

The method may comprise a further step of subjecting the events to an ambient flicker filtering operation prior to the counting step.

The interval between the anchor frame and the current frame may be defined between middles of respective exposure intervals of the anchor frame and the current frame.

The method may comprise a further step of subjecting each frame to a motion-deblurring operation based on stored events having timestamps corresponding to an exposure interval of the frame.

The step of generating the optical flow may comprise the step of applying a convolutional neural network to stored events having timestamps corresponding to an interval between the anchor frame and the current frame.

A camera is also provided, generally comprising a frame-based camera module configured to store multiple frames captured from a target scene during an acquisition interval; an event-based camera module configured to store a series of events produced by viewing the target scene during the acquisition interval, the events including timestamps synchronized with timestamps of the frames; a control circuit operating on the stored frames and events, configured to select an anchor frame among the multiple frames; align a current frame with respect to the anchor frame, based on events occurring in an interval between the anchor frame and the current frame; and merge the aligned frame and the anchor frame.

The camera may comprise an event counter configured, for each frame, to count a number of events occurring during an exposure interval of the frame; and the control circuit programmed to select as the anchor frame the frame producing the lowest event count.

The camera may comprise a flicker filter configured to remove ambient flicker events from events being provided to the event counter.

The interval between the anchor frame and the current frame may be defined between middles of respective exposure intervals of the anchor frame and the current frame.

The camera may comprise a motion-deblurring filter configured to operate on each frame based on events occurring during an exposure interval of the frame.

The camera may comprise a convolutional neural network configured to generate the optical flow for the current frame from events occurring in an interval between the anchor frame and the current frame.

**Brief Description of the Drawings**

Embodiments will be exposed in the following description provided for exemplary purposes only, in relation to the appended drawings, in which:

Figure 1 is a schematic diagram of a multi-frame stacking pipeline according to an embodiment; and

Figure 2 is a timing diagram illustrating operation details of the pipeline.

**Detailed Description**

As previously mentioned, the accuracy of motion estimation implemented in multi-frame stacking techniques is important for obtaining good quality image enhancement. Frame-based motion estimation relies on the presence of sharp edges, i.e., high-contrast transitions in the frames. When the acquired frames have motion blur, the edges become smooth and have lower contrast, which adversely affects the accuracy of the motion estimation based on these frames.

Motion blur is mainly caused by excessive exposure time, which exposure time is usually chosen by the cameras to achieve a compromise between motion blur and noise, while usually favoring noise reduction. Lower exposure times may be used with a higher amplification of the signals (i.e., setting a higher ISO number), which reduces the motion blur but also the signal-to-noise ratio SNR.

In order to overcome the effects of motion blur on motion estimation, it is provided herein to use an event-based camera module viewing the same scene as a frame-based camera module and to operate the motion estimation on the events occurring between consecutive frames. Event-based cameras are asynchronous and react much faster (in the order of microseconds) at the scale of the exposure times involved in frame-based imaging (tens of milliseconds), and are not subject to motion blur.

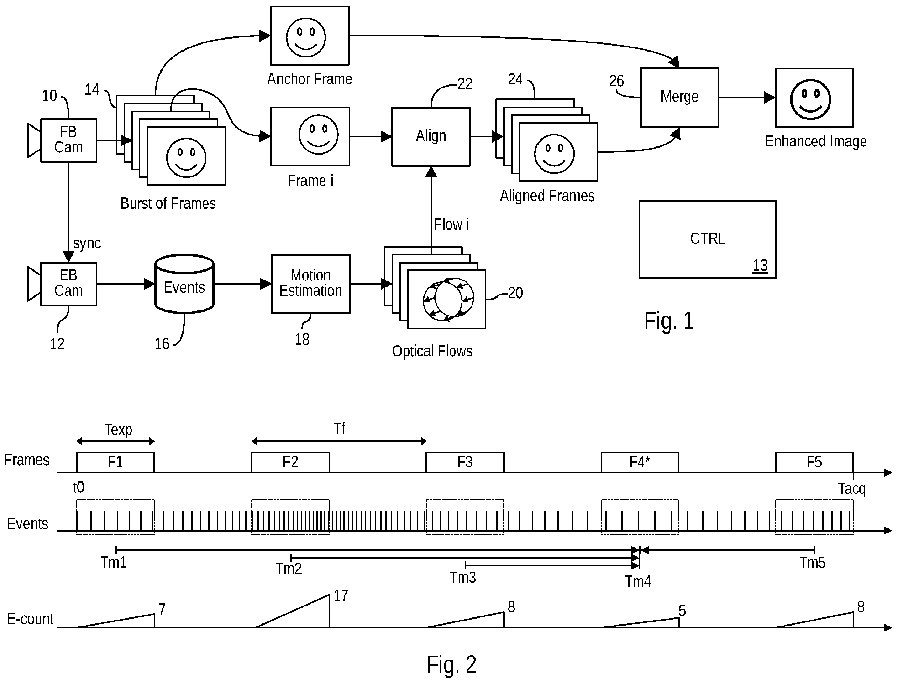

Figure 1 is a schematic diagram of a multi-frame stacking pipeline using an event-based sensor, according to an embodiment. The pipeline may be implemented in a camera or a smartphone. It includes a frame-based camera module 10 and an event-based camera module 12 arranged to view the same scene. A control circuit or microcontroller 13 may be programmed to perform or manage various of the operations in the pipeline, wherein some of the operations, such as motion estimation, may be delegated to hardware accelerators dedicated to image processing.

Preferably, both camera modules are implemented as a hybrid camera, i.e., using a single sensor array including both frame-based and event-based pixels. In such a hybrid camera, events and brightness signals are spatially in register. If spatially separated and off-axis cameras are used, an additional conventional step may be implemented to register the events with corresponding pixels of the frame-based camera module, such as disclosed in patent application EP4068207.

The frame-based and event-based camera modules are connected to synchronize their timestamps. The resolution of the timestamps is at least that of the events.

When a user presses a shutter button, the camera plans a multi-frame sequence, generally determining the number of frames, the corresponding exposure time intervals, and the inter-frame intervals or framerate. A typical planning may simply apply default settings stored by the user for the number of frames and the frame rate, while setting the exposure automatically based on the conditions measured upon pressing the shutter button.

Subsequently, the frame-based module 10 captures a burst of frames in a storage 14 during an acquisition time interval, while the event-based module 12 records all the events occurring during the acquisition interval in a storage 16.

In a case where the first frame is used as an anchor to avoid "shutter lag", as soon as the second or subsequent frame of the burst is stored, a motion estimation 18 may be initiated based on the events recorded between the current frame i and the anchor frame, here the first frame. Any of several known motion estimation techniques operating on events may be chosen, such as a convolutional neural network (CNN), that produces an optical flow for the current frame, stored at 20. An optical flow typically includes, for each pixel of the current frame, a vector that displaces the pixel to the matching pixel in the anchor frame. An exemplary CNN is disclosed in [Zhu, A., Yuan, L., Chaney, K., Daniilidis, K., "EV-Flow-Net: Self-Supervised Optical Flow Estimation for Event-based Cameras", Robotics: Science and Systems (RSS), 2018].

As soon as the optical flow 20 for the current frame i is ready, it may be used at 22 to align the current frame i with the anchor frame and store a corresponding aligned frame at 24. The aligning operation typically involves displacing each pixel of the current frame by the corresponding vector provided in the current optical flow i, whereby the displaced pixel occupies another pixel location in the aligned frame. The operation may cause loss of some pixels at the edges of the frame when the vectors cross the frame edges.

Alternative solutions exist that directly produce an aligned frame without using optical flows or vectors, for instance by using a time shifting operator disclosed in patent application EP4168977, or by using machine learning methods as described in [TULYAKOV, Stepan, GEHRIG, Daniel, GEORGOULIS, Stamatios, et al. "Time lens: Event-based video frame interpolation", Proceedings of the IEEE/CVF conference on computer vision and pattern recognition. 2021. p. 16155-16164.]

The aligned frames 24 and the anchor frame are merged at 26 to produce the final enhanced image. The merging technique used depends on the purpose of the multi-frame stacking (noise reduction, HDR, super-resolution, etc.). The aligned frames are similar to that produced with conventional multi-frame stacking techniques, so the merging technique may be any known technique. The aligned frames are however the result of a motion estimation based on events rather than on frames, so they are significantly more accurate, especially when the frames contain motion blur or when the frames have different exposure times.

When the selected anchor frame is not the first of the burst, motion estimation may start at the earliest when the anchor frame is captured. In some applications, it is preferred to select an optimal anchor frame according to specific criteria, in which case the anchor frame is not necessarily the first. Such an anchor selection method is disclosed further below.

Figure 2 illustrates timing diagrams of the operation of the pipeline and highlights specific aspects of its operation.

The top or "frame" diagram illustrates a capture phase of a burst of five frames F1-F5 by the frame-based module 10 from a time $t0$, planned after a user presses a shutter button to initiate a multi-frame stacking operation. An acquisition time interval $Tacq$ starts at $t0$ and ends at the end of the last frame F5. Each frame is exposed during an exposure time interval $Texp$ and consecutive frames are distant by a time interval $Tf$. The exposure times $Texp$ of the frames may be different, for instance when generating an HDR image. The time intervals $Tf$ are usually equal and as short as allowed by the frame-based module's capabilities while respecting the exposure time intervals $Texp$.

Each frame may be stored with timing information, for instance the timestamps of the beginning and end of its exposure interval $Texp$.

The middle or "event" diagram illustrates exemplary events produced and stored during the acquisition interval $Tacq$ by the event-based module 12. As shown, the events may occur at a significantly faster rate than the frames. The example corresponds to motion in the scene that accelerates up to the end of frame F2 then decelerates to accelerate again. Each event is typically stored with a timestamp, pixel coordinates, and a polarity. As previously mentioned, the timestamps are synchronized with the timing information stored with the frames F1-F5.

In this example, the anchor frame is F4*, selected as explained further below. Hence, motion estimation may start when frame F4* is captured. Horizontal arrows below the event diagram cover exemplary time intervals over which motion is estimated for each frame. The direction of the arrows is toward the anchor frame, illustrating that the displacement vectors are calculated to displace the pixels of the frames towards matching pixels of the anchor frame. Moreover, the arrows start and end in the middle of an exposure interval Texp, meaning motion is estimated between the middles of the exposure intervals, representing the frame states at a median displacement during the corresponding exposure intervals. Such a choice for the motion estimation intervals is particularly well suited when the frames have different exposure intervals, such as for generating HDR images.

If the frames are stored, for example, with the timestamps corresponding to the beginnings and ends of the exposure intervals $Texp,$ a timestamp $Tm$ corresponding to the middle of each exposure interval may be calculated as the average of the timestamps of the beginning and end of the exposure interval.

Then, more specifically, the optical flows for frames F1, F2, F3 and F5 are calculated with the stored events having timestamps respectively between the pairs of middle timestamps ($Tm1, Tm4$), ($Tm2, Tm4$), ($Tm3, Tm4$), and ($Tm4, Tm5$). Note that the optical flow calculated for each frame in principle follows increasing time, producing vectors that represent the displacement of each pixel of the earlier frame towards a pixel of the later frame. Hence, for the frames preceding the anchor F4*, the directions of the displacement vectors are correct from the standard calculation, as shown by the forward arrows. However, regarding frame F5, the anchor F4* is the earlier frame, which implies that the vectors produced by the calculation point in the opposite direction and should be inverted, as shown by the corresponding backward arrow.

Since motion for each frame of the burst is calculated with respect to a common anchor frame, that anchor frame is preferably of best quality, especially the sharpest in the burst. Detecting a sharp frame with an event-based camera happens to be particularly simple: it is the frame that has the least events occurring during its exposure time. Indeed, the number of events occurring during a given time interval is a direct indicator of quantity of motion, provided spurious causes of event triggering are removed, such as ambient flickering. Ambient flickering may be compensated with known techniques, such as disclosed in patent application EP3744084, prior to counting the events during each exposure interval.

The bottom graph of Figure 2 illustrates a method for selecting the sharpest anchor frame in terms of motion blur. The method is implemented during the initial multi-frame planning phase. A previously reset event counter is started at the beginning of each exposure interval *Texp* and stopped at the end of the exposure interval. The reached counts are stored over the acquisition interval *Tacq*. The counts are then compared and the frame having the lowest count is selected as the anchor frame. In the shown example, successive counts of 7, 17, 8, 5 and 8 are obtained. The lowest count of 5 corresponds to frame F4 that earns the title of anchor frame. Motion estimation may then start from the stored frames and events.

In some photography applications, one might want to maximize sharpness in a region while leaving motion blur in other regions. This may be achieved by counting events in separate regions of the image plane, calculating a score based on the regions and their respective counts, and selecting the frame based on a best score. An exemplary application is the photography of a fast-moving object (i.e., a cyclist), wherein the cyclist should be sharp (low event count in a center region) while the background should be motion-blurred (high event count in the surrounding region).

Optical flows have been calculated above independently for every frame, causing some calculations to reuse events already used in previous calculations (as illustrated by overlapping portions of the arrows below the event graph). As an alternative more compute-effective solution, a continuous time optical flow may be predicted by feeding all the events occurring during the acquisition interval *Tacq* to a convolutional neural network, see for instance [Gehrig, M., Muglikar, M., Scaramuzza, D., "Dense Continuous-Time Optical Flow from Events and Frames", arXiv, 2022]. Such an operation creates a prediction function $B(t, x, y)$ that produces a pixel displacement vector for any triplet of parameters $(t, x, y)$, where $x$ and $y$ are the coordinates of the pixel to map and $t$ is the timestamp of the frame to which the pixel is mapped. The anchor frame is then assumed to be the first of the burst.

The new coordinates of a displaced pixel $X'$ at a time $t$ are thus expressed by:

$$X'(t) = X + B(t, X),$$

where $X = (x, y)$ is the pixel to map at time $t = 0$.

If the anchor frame is selected at a time $t_a$, the displacement at time $t$ referenced to the anchor frame is the displacement from the anchor frame to the first frame (at $t = 0$), plus the displacement from the first frame to the frame at time $t$, hence:

$$B^{-1}(t_a, X_a) + B(t, B^{-1}(t_a, X_a)),$$

where $B^{-1}$ is the inverse function of $B$, $X_a = (x_a, y_a)$ is the pixel to map in the anchor frame at time $t_a$ and $B^{-1}(t_a, X_a)$ is the displacement vector mapping pixel $X_a$ to the first frame at $t = 0$.

The new coordinates of a displaced pixel $X'$ at a time $t$ are then expressed by:

$$X'(t) = X_a + B^{-1}(t_a, X_a) + B(t, B^{-1}(t_a, X_a)).$$

Although motion blur in the frames does not affect the accuracy of the motion estimation based on events, merging excessively blurry frames may still produce undesired effects. It happens that events may be used effectively for removing motion blur, such as disclosed in patent application EP4168977. Thus, after a current frame is captured with the corresponding events during the exposure interval, motion blur may be compensated prior to the merging operation 26 by using such a de-blurring technique with the events.

The resolutions of the frame-based and event-based modules may be different. Event-based sensor arrays may have a lower resolution than frame-based sensors. Although the motion estimation calculations may not be affected, the accuracy of the displacement vectors can be at most the same as the resolution of the event-based sensor. It is common practice in frame-based algorithms to work in much lower resolution than the original image, see [Hasinoff SW, Sharlet D, Geiss R, Adams A, Barron JT, et al. 2016, "Burst photography for high dynamic range and low-light imaging on mobile cameras", ACM Transactions on Graphics 35:192].

## Claims

1. A computer-implemented image enhancement method using multi-frame stacking, the method comprising the following steps:

   storing multiple frames of a target scene captured by a frame-based camera (10) during an acquisition interval ($Tacq$);
   storing a series of events produced during the acquisition interval by an event-based camera (12) viewing the target scene;
   synchronizing timestamps of the events and timestamps of the frames;
   selecting an anchor frame among the multiple frames;
   aligning a current frame with respect to the anchor frame, based on stored events (16) having timestamps corresponding to an interval between the anchor frame and the current frame; and
   merging the aligned frame and the anchor frame.

2. The method of claim 1, wherein the aligning step comprises:

   generating an optical flow (20) for a current frame with respect to the anchor frame, based on the stored events (16); and
   creating the aligned frame (24) by applying the optical flow to the current frame.

3. The method of claim 1, wherein the step of selecting the anchor frame comprises:

   for each frame, counting a number of stored events having timestamps corresponding to an exposure interval ($Texp$) of the frame; and
   selecting the anchor frame based on the event counts.

4. The method of claim 3, comprising a further step of subjecting the events to an ambient flicker filtering operation prior to the counting step.

5. The method of claim 1, wherein the interval between the anchor frame and the current frame is defined between middles ($Tm$) of respective exposure intervals of the anchor frame and the current frame.

6. The method of claim 1, comprising a further step of subjecting each frame to a motion-deblurring operation based on stored events having timestamps corresponding to an exposure interval of the frame.

7. The method of claim 1, wherein the step of generating the optical flow comprises applying a convolutional neural network to stored events having timestamps corresponding to an interval between the anchor frame and the current frame.

8. A camera comprising:

   a frame-based camera module (10) configured to store multiple frames captured from a target scene during an acquisition interval ($Tacq$);
   an event-based camera module (12) configured to store a series of events produced by viewing the target scene during the acquisition interval, the events including timestamps synchronized with timestamps of the frames;
   a control circuit (13) operating on the stored frames and events, configured to:

   select an anchor frame among the multiple frames;
   align a current frame with respect to the anchor frame, based on events (16) occurring in an interval between the anchor frame and the current frame; and
   merge the aligned frame and the anchor frame.

9. The camera of claim 8, comprising:

   an event counter configured, for each frame, to count a number of events occurring during an exposure interval ($Texp$) of the frame; and
   the control circuit programmed to select as the anchor frame the frame producing the lowest event count.

10. The camera of claim 9, comprising a flicker filter configured to remove ambient flicker events from events being provided to the event counter.

11. The camera of claim 8, wherein the interval between the anchor frame and the current frame is defined between middles ($Tm$) of respective exposure intervals of the anchor frame and the current frame.

12. The camera of claim 8, comprising a motion-deblurring filter configured to operate on each frame based on events occurring during an exposure interval of the frame.

13. The camera of claim 8, comprising a convolutional neural network configured to generate the optical flow for the current frame from events occurring in an interval between the anchor frame and the current frame.

**Patentansprüche**

1. Computerimplementiertes Bildverbesserungsverfahren unter Verwendung von Multiframe-Stapelung, das Verfahren umfassend die folgenden Schritte:

    Speichern mehrerer Frames einer Zielszene, die durch eine Framebasierte Kamera (10) während eines Erfassungsintervalls ($Tacq$) aufgenommen werden;
    Speichern einer Reihe von Ereignissen, die während des Erfassungsintervalls durch eine ereignisbasierte Kamera (12), die die Zielszene betrachtet, erzeugt werden;
    Synchronisieren von Zeitstempeln der Ereignisse und Zeitstempeln der Frames; Auswählen eines Anker-Frames aus den mehreren Frames;
    Ausrichten eines aktuellen Frames in Bezug auf den Anker-Frame, basierend auf gespeicherten Ereignissen (16), die Zeitstempel, die einem Intervall zwischen dem Anker-Frame und dem aktuellen Frame entsprechen, aufweisen; und
    Zusammenführen des ausgerichteten Frames und des Anker-Frames.

2. Verfahren nach Anspruch 1, wobei der Ausrichtungsschritt umfasst:

    Generieren eines optischen Flusses (20) für einen aktuellen Frame in Bezug auf den Anker-Frame, basierend auf den gespeicherten Ereignissen (16); und
    Erstellen des ausgerichteten Frames (24) durch Anwenden des optischen Flusses auf den aktuellen Frame.

3. Verfahren nach Anspruch 1, wobei der Schritt des Auswählens des Anker-Frames umfasst:

    für jeden Frame, Zählen einer Anzahl von gespeicherten Ereignissen, die Zeitstempel, die einem Belichtungsintervall ($Texp$) des Frames entsprechen, aufweisen; und
    Auswählen des Anker-Frames basierend auf den Ereigniszählungen.

4. Verfahren nach Anspruch 3, umfassend einen weiteren Schritt eines Unterziehens der Ereignisse einer Umgebungsflimmerfilteroperation vor dem Zählschritt.

5. Verfahren nach Anspruch 1, wobei das Intervall zwischen dem Anker-Frame und dem aktuellen Frame zwischen Mitten *(Tm)* jeweiliger Belichtungsintervalle des Anker-Frames und des aktuellen Frames definiert ist.

6. Verfahren nach Anspruch 1, umfassend einen weiteren Schritt des Unterziehens jedes Frames einer Bewegungsscharfzeichnungsoperation basierend auf gespeicherten Ereignissen, die Zeitstempel, die einem Belichtungsintervall des Frames entsprechen, aufweisen.

7. Verfahren nach Anspruch 1, wobei der Schritt des Generierens des optischen Flusses ein Anwenden eines neuralen Faltungsnetzwerks auf gespeicherte Ereignisse umfasst, die Zeitstempel, die einem Intervall zwischen dem Anker-Frame und dem aktuellen Frame entsprechen, aufweisen.

8. Kamera, umfassend:

    ein Frame-basiertes Kameramodul (10), das konfiguriert ist, um mehrere Frames, die von einer Zielszene während eines Erfassungsintervalls ($Tacq$) aufgenommen werden, zu speichern;
    ein ereignisbasiertes Kameramodul (12), das konfiguriert ist, um eine Reihe von Ereignissen, die durch Betrachten der Zielszene während des Erfassungsintervalls erzeugt werden, zu speichern, wobei die Ereignisse Zeitstempel, die mit Zeitstempeln der Frames synchronisiert sind, einschließen;
    eine Steuerschaltung (13), die auf den gespeicherten Frame und Ereignissen arbeitet, die konfiguriert ist zum:

        Auswählen eines Anker-Frames unter den mehreren Frames;
        Ausrichten eines aktuellen Frames in Bezug auf den Anker-Frame, basierend auf Ereignissen (16), die in einem Intervall zwischen dem Anker-Frame und dem aktuellen Frame auftreten; und
        Zusammenführen des ausgerichteten Frames und des Anker-Frames.

9. Verfahren nach Anspruch 8, umfassend:

    einen Ereigniszähler, der konfiguriert ist, für jeden Frame, um eine Anzahl von Ereignissen, die während eines Belichtungsintervalls *(Texp)* des Frames auftreten, zu zählen; und
    die Steuerschaltung, die programmiert ist, um den Frame, der die niedrigste Ereigniszählung erzeugt, als den Anker-Frame auszuwählen.

10. Kamera nach Anspruch 9, umfassend einen Flimmerfilter, der konfiguriert ist, um Umgebungsflimmerereignisse aus Ereignissen, die dem Ereigniszähler bereitgestellt werden, zu entfernen.

11. Kamera nach Anspruch 8, wobei das Intervall zwischen dem Anker-Frame und dem aktuellen Frame zwischen Mitten *(Tm)* jeweiliger Belichtungsintervalle des Anker-Frames und des aktuellen Frames definiert ist.

12. Kamera nach Anspruch 8, umfassend einen Bewegungsscharfzeichnungsfilter, der konfiguriert ist, um auf jedem Frame basierend auf Ereignissen, die während eines Belichtungsintervalls des Frames auftreten, zu arbeiten.

13. Kamera nach Anspruch 8, umfassend ein neurales Faltungsnetzwerk, das konfiguriert ist, um den optischen Fluss für den aktuellen Frame aus Ereignissen, die in einem Intervall zwischen dem Anker-Frame und dem aktuellen Frame auftreten, zu generieren.

## Revendications

1. Procédé mis en œuvre par ordinateur d'amélioration d'image par empilement multi-trame, le procédé comprenant les étapes suivantes :

stocker plusieurs trames d'une scène cible capturées par une caméra à base de trames (10) durant un intervalle d'acquisition (*Tacq*) ;
stocker une série d'événements produits durant l'intervalle d'acquisition par une caméra événementielle (12) observant la scène cible ;
synchroniser les horodatages des événements et les horodatages des trames ;
sélectionner une trame d'ancrage parmi les plusieurs trames ;
aligner une trame courante par rapport à la trame d'ancrage, sur la base d'événements stockés (16) dont les horodatages correspondent à un intervalle entre la trame d'ancrage et la trame courante ; et
fusionner la trame alignée et la trame d'ancrage.

2. Procédé selon la revendication 1, dans lequel l'étape d'alignement comprend :

générer un flux optique (20) pour une trame courante par rapport à la trame d'ancrage, sur la base des événements stockés (16) ; et
créer la trame alignée (24) en appliquant le flux optique à la trame courante.

3. Procédé selon la revendication 1, dans lequel l'étape de sélection de la trame d'ancrage comprend :

pour chaque trame, compter un nombre d'événements stockés dont les horodatages correspondent à un intervalle d'exposition *(Texp)* de la trame ; et

sélectionner la trame d'ancrage sur la base des comptages d'événements.

4. Procédé selon la revendication 3, comprenant une étape supplémentaire consistant à soumettre les événements à une opération de filtrage du scintillement ambiant avant l'étape de comptage.

5. Procédé selon la revendication 1, dans lequel l'intervalle entre la trame d'ancrage et la trame courante est défini entre les milieux *(Tm)* des intervalles d'exposition respectifs de la trame d'ancrage et de la trame courante.

6. Procédé selon la revendication 1, comprenant une étape supplémentaire consistant à soumettre chaque trame à une opération de suppression de flou de mouvement basée sur des événements stockés dont les horodatages correspondent à un intervalle d'exposition de la trame.

7. Procédé selon la revendication 1, dans lequel l'étape de génération du flux optique comprend l'application d'un réseau de neurones convolutif aux événements stockés dont les horodatages correspondent à un intervalle entre la trame d'ancrage et la trame courante.

8. Caméra comprenant :

un module de caméra à base de trames (10) configuré pour stocker plusieurs trames capturées d'une scène cible durant un intervalle d'acquisition (*Tacq*) ;
un module de caméra événementielle (12) configuré pour stocker une série d'événements produits en observant la scène cible durant l'intervalle d'acquisition, les événements incluant des horodatages synchronisés avec les horodatages des trames ;
un circuit de commande (13) opérant sur les trames et événements stockés, configuré pour :

sélectionner une trame d'ancrage parmi les plusieurs trames ;
aligner une trame courante par rapport à la trame d'ancrage, sur la base d'événements (16) survenant dans un intervalle entre la trame d'ancrage et la trame courante ; et
fusionner la trame alignée et la trame d'ancrage.

9. Caméra selon la revendication 8, comprenant :

un compteur d'événements configuré, pour chaque trame, pour compter un nombre d'événements survenant durant un intervalle d'exposition *(Texp)* de la trame ; et

le circuit de commande étant programmé pour sélectionner comme trame d'ancrage la trame produisant le comptage le plus faible.

10. Caméra selon la revendication 9, comprenant un filtre de scintillement configuré pour supprimer les événements de scintillement ambiant des événements fournis au compteur d'événements.

11. Caméra selon la revendication 8, dans laquelle l'intervalle entre la trame d'ancrage et la trame courante est défini entre les milieux *(Tm)* des intervalles d'exposition respectifs de la trame d'ancrage et de la trame courante.

12. Caméra selon la revendication 8, comprenant un filtre de suppression de flou de mouvement configuré pour opérer sur chaque trame sur la base d'événements survenant durant un intervalle d'exposition de la trame.

13. Caméra selon la revendication 8, comprenant un réseau de neurones convolutif configuré pour générer le flux optique pour la trame courante à partir d'événements survenant dans un intervalle entre la trame d'ancrage et la trame courante.

FB Cam — 10

sync

EB Cam — 12

Burst of Frames — 14

Events — 16

Anchor Frame

Frame i

Motion Estimation — 18

Align — 22

Flow i

Optical Flows — 20

Aligned Frames — 24

Merge — 26

Enhanced Image

CTRL — 13

**Fig. 1**

Frames

F1 F2 F3 F4* F5

Texp   Tf   Tacq

t0

Events

Tm1 Tm2 Tm3 Tm4 Tm5

E-count

7   17   8   5   8

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4068207 A
- EP 4168977 A

- EP 3744084 A


**Non-patent literature cited in the description**

- **GODARD C** ; **MATZEN K** ; **UYTTENDAELE M**. Deep burst denoising. *European Conference on Computer Vision*, 2018, 560-577
- **HASINOFF SW** ; **SHARLET D** ; **GEISS R** ; **ADAMS A** ; **BARRON JT et al.** Burst photography for high dynamic range and low-light imaging on mobile cameras. *ACM Transactions on Graphics*, 2016, vol. 35, 192
- **FARSIU S** ; **ELAD M** ; **MILANFAR P.** Multiframe demosaicing and super-resolution of color images. *IEEE Trans. Image Processing*, 2006, vol. 15, 141-159
- **MESSIKOMMER NICO et al.** Multi-Bracket High Dynamic Range Imaging with Event Cameras. *IEEE/CVF Conference on Computer Vision and Pattern Recognition Workshops (CVPRW)*, 2022
- **HAN JIN et al.** Neuromorphic Camera Guided High Dynamic Range Imaging. *IEEE/CVF Conference on Computer Vision and Pattern Recognition (CVPR)*, 2020

- **SHAW RICHARD et al.** HDR Reconstruction from Bracketed Exposures and Events. *arXiv*
- **WANG BISHAN et al.** Event Enhanced High-Quality Image Recovery. *Topics in Cryptology - CT-RSA*, 2020
- **ZHU, A** ; **YUAN, L** ; **CHANEY, K** ; **DANIILIDIS, K**. EV-FlowNet: Self-Supervised Optical Flow Estimation for Event-based Cameras. *Robotics: Science and Systems (RSS)*, 2018
- **TULYAKOV, STEPAN** ; **GEHRIG, DANIEL** ; **GEORGOULIS, STAMATIOS et al.** Time lens: Event-based video frame interpolation. *Proceedings of the IEEE/CVF conference on computer vision and pattern recognition.*, 2021, 16155-16164
- **GEHRIG, M** ; **MUGLIKAR, M** ; **SCARAMUZZA, D**. Dense Continuous-Time Optical Flow from Events and Frames. *arXiv*, 2022